# FASCICULE DE BREVET EUROPEEN

(11) **EP 1 676 412 B1**
(45) Date de publication et mention de la délivrance du brevet: **21.02.2007**
(21) Numéro de dépôt: 04787484.7
(22) Date de dépôt: 29.09.2004
(51) Int. Cl.: H04L 29/06, H04Q 3/00

(54) **Procédé pour etablir un liaison directe de coordination entre un premier et un secnd centres de commande d'execution de services**
Verfahren zur Herstellung einer Direktkoordinationsverbindung zwischen einer ersten und einer zweiten Steuerzentrale zur Ausführung von Diensten
Method for establishing a direct coordination link between a first and second control centre for carrying out services

(30) Priorité: 17.10.2003 FR 0312193
(43) Date de publication de la demande: 05.07.2006
(73) Titulaire: FRANCE TELECOM, 75015 Paris (FR)
(72) Inventeur: CHATRAS, Bruno, F-75012 PARIS (FR); CLEUZIOU, Olivier, F-94200 IVRY SUR SEINE (FR)
(74) Mandataire: Habasque, Etienne J. Jean-François
(86) Numéro de dépôt international: PCT/FR2004/002469
(87) Numéro de publication internationale: WO 2005/048557

(56) Documents cités:
- US-A1- 2002 154 756
- US-B1- 6 463 141
- US-B1- 6 560 327

## Description

L'invention concerne un procédé pour établir une liaison de coordination entre un premier et un second centres de commande de l'exécution de service dans un réseau de télécommunication intelligent, le premier et le second centres étant aptes à traiter chacun de façon autonome respectivement une première et une seconde demandes de service, et le réseau comportant, en plus de voies de communication utilisées pour établir des liaisons de télécommunication entre différents terminaux raccordés au réseau, des voies de communication réservées aux transports de signaux de commande d'appels pour commander l'établissement, la modification et/ou la libération de chaque liaison de télécommunication dans ce réseau,

De plus, ce procédé comporte une phase de traitement d'un appel qui est déclenchée à chaque appel émis par un client et qui comprend une étape d'établissement de la liaison de coordination à l'aide d'une adresse d'au moins un des deux centres pour que ces centres puissent coordonner leurs traitements respectifs des première et seconde demandes de service du client.

Aujourd'hui, les réseaux de télécommunications intelligents offrent de plus en plus de services à leurs clients. Ces services sont, par exemple, des boîtes de messageries vocales, des services de paiement par carte prépayée, des services d'annuaires vocaux, etc...

Ces services sont réalisés par des centres de commande d'exécution de services, connus sous l'acronyme anglais SCP (Service Control Point). Dans la suite de cette description, ces centres seront appelés centres SCP. Ils sont, soit présents dans le réseau, soit raccordés à celui-ci.

A chaque demande de service émise par un client du réseau, un centre SCP propre à traiter cette demande de service est activé. Lorsque l'utilisateur, lors d'un même appel, transmet plusieurs demandes de service, plusieurs centres SCP doivent être activés successivement ou simultanément. Des problèmes se posent lorsque plusieurs services incompatibles entre eux sont simultanément activés par un même client au cours d'un même appel. Pour cette raison, il est nécessaire de gérer les interactions entre les différents centres SCP simultanément activés et de coordonner leur traitement respectif. Des procédés statiques de gestion de ces interactions ont été proposés. Par exemple, ces procédés statiques font appel à des mécanismes de priorité ou à des matrices de résolution de conflits préenregistrées. Ils ont en commun d'utiliser des règles prédéfinies à l'avance pour résoudre ou éviter des conflits entre plusieurs services simultanément demandés. Toutefois, ces procédés statiques se sont avérés difficiles à mettre en oeuvre dans un contexte où le nombre de services s'accroît rapidement, puisque les données préenregistrées doivent alors être fréquemment mises à jour.

Dans ce contexte de croissance rapide du nombre de services, il a été proposé de gérer leurs interactions de façon dynamique, notamment en prévoyant des mécanismes pour que les centres SCP puissent communiquer entre eux et donc coordonner leur traitement.

A cet effet, les standards sur les réseaux intelligents tels que la recommandation UIT-T Q.1248 (Interface Recommandation for Intelligent Network Capability Set 4), prévoient une interface permettant à des centres SCP de communiquer entre eux. Le mécanisme d'interface prévoit qu'un premier centre SCP1 a la possibilité de demander l'exécution d'un second service par un second centre SCP2. La mise en oeuvre de cette interface nécessite l'établissement d'une liaison de transmission d'informations entre les centres SCP1 et SCP2. Une fois cette liaison établie, le centre SCP2 reçoit des instructions d'exécution de service transmises par le centre SCP1, les exécute et transmet le résultat de leur exécution au centre SCP1, par l'intermédiaire de cette même liaison. Ainsi, cette interface permet au centre SCP1 de sous-traiter des demandes de service à l'autre centre SCP2.

Le document US 6,560,327 B1 décrit des centres SCP qui établissent une liaison de coordination entre eux.

La mise en oeuvre d'une telle interface suppose que le centre SCP1 connaisse à l'avance l'adresse sur le réseau du centre SCP2 à contacter. Ceci s'avère difficile lorsque le nombre de centres SCP ne cesse de croître. En effet, cela suppose que les adresses des centres SCP disponibles sur le réseau soient mises à jour régulièrement dans chacun des centres SCP.

L'invention vise à remédier à cet inconvénient en proposant un procédé pour établir une liaison de coordination entre deux centres SCP sans que ces deux centres SCP ne connaissent à l'avance l'adresse de l'autre centre SCP sur le réseau.

L'invention a donc pour objet un procédé tel que décrit ci-dessus caractérisé en ce que l'un des centres transmet son adresse à l'autre centre en insérant cette adresse dans l'un des signaux de commande d'appels transmis vers l'autre centre, et en ce que le centre ayant reçu l'adresse insérée dans un signal de commande d'appel établit ladite liaison de coordination en utilisant des voies de communication distinctes de celles employées pour transporter le signal de commande d'appel dans lequel est insérée l'adresse de l'un des centres (objet de la revendication 1). L'invention a aussi pour objet un réseau de télécommunication défini par la revendication 9 et un centre de commande de l'exécution de services défini par la revendication 10.

Dans le procédé ci-dessus, l'adresse de l'un des centres SCP est communiquée à l'autre centre SCP lors de la phase de traitement de l'appel du client. L'autre centre SCP ayant reçu l'adresse est dès lors capable d'établir une liaison de transmission d'informations avec le centre SCP correspondant à l'adresse reçue. Grâce à ce procédé, il n'est plus nécessaire que les centres SCP connaissent avant même de commencer la phase de traitement de l'appel du client, l'adresse du ou de chaque centre SCP avec lequel une liaison de coordination devra être établie pour coordonner leur traitement.

Suivant d'autres caractéristiques du procédé conformes à l'invention, celui-ci se caractérise en ce que :
- lorsque plusieurs phases de traitement d'appels se déroulent simultanément pour différents clients du réseau, le centre qui insère son adresse dans le signal de commande d'appel, insère en plus un identifiant de l'appel traité, et les premier et second centres d'exécution de service indiquent l'appel concerné par les informations de coordination transmises par l'intermédiaire de ladite liaison de coordination en utilisant cet identifiant de manière à coordonner leur traitement respectif pour chaque appel ;
- seule la liaison directe de coordination est utilisée pour échanger des informations de coordination des traitements respectifs des première et seconde demandes de service effectués par les deux centres d'exécution de service ;
- le signal de commande d'appel comporte au moins un champ d'adresse propre à recevoir l'adresse sur le réseau du second centre, ce champ comportant encore une partie non utilisée lorsque l'adresse du second centre est enregistrée dans ce champ, l'adresse du premier centre et/ou l'identifiant d'appel étant insérés dans la partie non utilisée du champ d'adresse, de manière à ce que ces informations se propagent conjointement au travers du réseau, jusqu'au second centre ;
- pour un réseau dans lequel les premier et second centres sont raccordés à des points de commande différents du réseau, les points de commande du réseau étant propres à raccorder entre elles, les différentes voies de communication pour former lesdites liaisons de télécommunication, le premier centre et le second centre communiquent avec leur point de commande respectif en utilisant un premier protocole de communication pour recevoir et/ou transmettre lesdits signaux de commande d'appels, les différents points de commande du réseau communiquent entre eux en utilisant un second protocole de communication différent du premier pour transmettre et/ou recevoir lesdits signaux de commande d'appels, et les premier et second centres communiquent entre eux par l'intermédiaire de la liaison de coordination en utilisant un troisième protocole de communication différent des premier et second protocoles de communication ;
- le premier protocole de communication est le protocole INAP et en ce que le second protocole de communication est le protocole ISUP ;
- pour un réseau dans lequel les premier et second centres sont raccordés à des points de commande différents du réseau, les points de commande du réseau étant propres à raccorder entre elles, les différentes voies de communication pour former lesdites liaisons de télécommunication, le premier centre et le second centre communiquent avec leur point de commande respectif en utilisant un premier protocole de communication pour recevoir et/ou transmettre lesdits signaux de commande d'appels, les différents points de commande du réseau communiquent entre eux en utilisant également le premier protocole, et les premier et second centres communiquent entre eux par l'intermédiaire de la liaison de coordination en utilisant un second protocole de communication différent du premier protocole de communication ; et
- le premier protocole de communication est le protocole SIP (Station Initiation Protocol).

L'invention sera mieux comprise à la lecture de la description qui va suivre donnée uniquement à titre d'exemple et faite en se référant aux dessins sur lesquels :
- la figure 1 est une illustration schématique de l'architecture d'un réseau intelligent,
- les figures 2 et 3 sont des organigrammes d'exemples de procédé conforme à l'invention, et
- les figures 4a et 4b sont des illustrations schématiques de deux variantes de fonctionnement du procédé conforme à l'invention dans le cas où le réseau intelligent comporte plus de deux centres SCP.

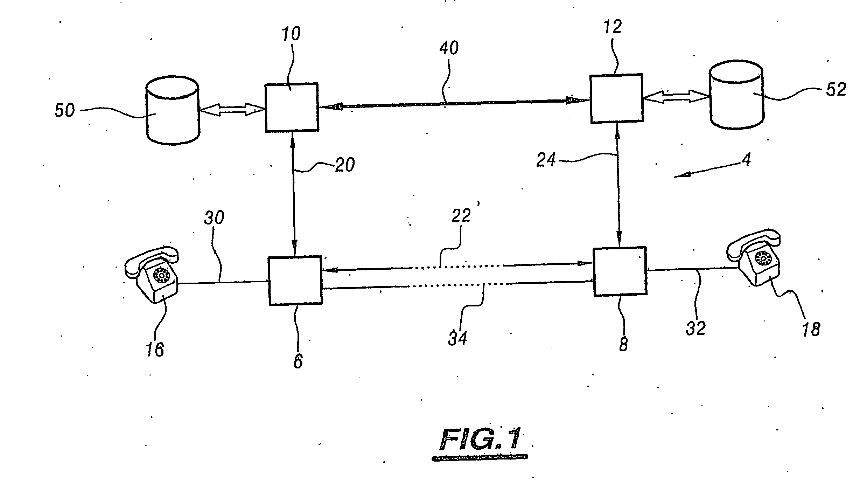

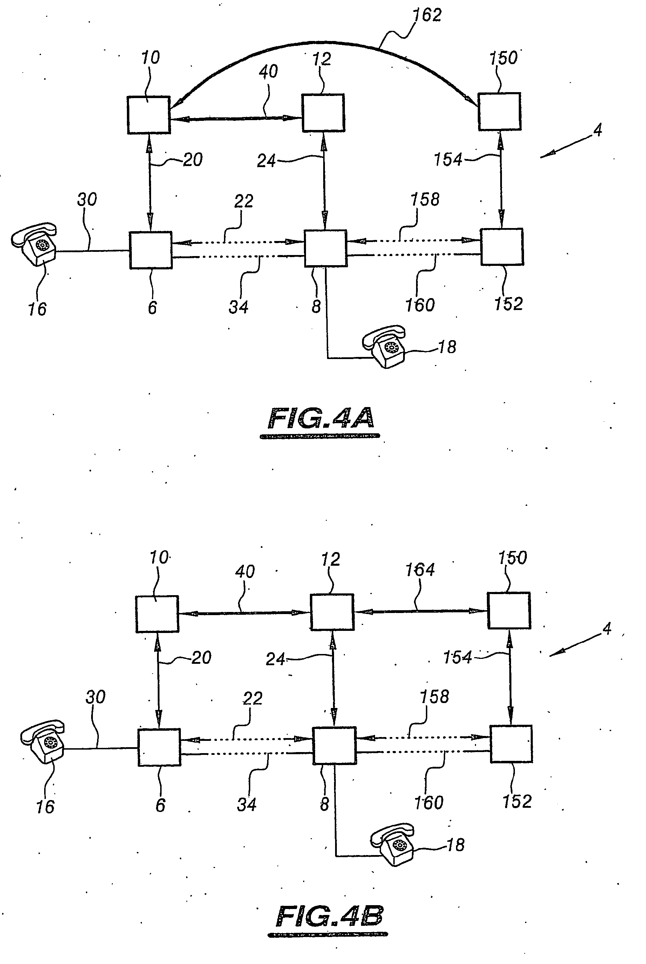

La figure 1 représente un réseau téléphonique intelligent désigné par la référence générale 4. Le réseau 4 est formé d'un grand nombre d'équipements. Sur cette figure 4, le nombre d'équipements formant le réseau intelligent a été réduit au minimum pour simplifier l'illustration.

Le réseau 4 comporte, par exemple, un réseau commuté RTC ou un réseau RNIS (Réseau Numérique à Intégration de Services) ou encore un réseau regroupant différentes technologies de télécommunication. Il comporte également, ici, un réseau IP (Internet Protocol). Ce réseau appartient à un ou à plusieurs opérateurs différents.

Typiquement, un réseau téléphonique intelligent comporte de nombreuses voies de communication reliant entre eux les différents équipements du réseau 4. Les équipements du réseau 4 se composent notamment :
- de points de commande 6, 8 également connus sous le terme de centres de commutation CCP (Call Control Point) dont la fonction consiste -en outre à raccorder les différentes voies de communication du réseau 4 les unes aux autres, de manière à former une liaison de transmission d'informations entre deux terminaux,
- de centres SCP 10, 12 propres chacun à traiter, de façon autonome, une demande de service transmise par un client du réseau 4, et
- de terminaux de télécommunication 16, 18 destinés à être utilisés par des clients du réseau 4, soit pour demander l'exécution d'un service, soit pour communiquer avec un autre terminal, par l'intermédiaire d'une liaison directe de transmission d'informations.

Un point de commande est connu sous le terme de commutateur dans un réseau RTC, de "gate keeper" dans un réseau H.323 ou encore par exemple, sous le nom de "proxy SIP" dans un réseau mettant en oeuvre la norme SIP (Session Initiation Protocol, norme RFC 3261 de l'IETF).

Dans la suite de cette description, les points de commande sont appelés points CCP et les liaisons de transmission d'informations établies par les points CCP entre deux terminaux sont appelées liaison de télécommunication.

Dans le cas des réseaux intelligents, des voies de communication du réseau sont réservées pour le transport de signaux de commande et en particulier des signaux de commande d'appels entre les différents équipements du réseau. Dans la suite de la description ces voies de communication réservées sont appelées voies de commande.

Ces signaux de commande d'appels sont destinés à commander l'établissement, la modification et/ou la libération des voies de télécommunication. Ces signaux sont, par exemple, conformes à l'un des protocoles suivants : ISUP (Integrated Service Digital Network-User Part, défini dans les recommandations UIT-T Q.761 à 764), INAP (Intelligent Network Application Protocol, défini dans la recommandation UIT-T Q.1248), H.225 défini par l'UIT-T et SIP (Session Initiation Protocol défini par l'IETF).

Pour un réseau téléphonique commuté RTC, le réseau formé par l'ensemble des voies de commande est connu sous le terme de réseau sémaphore. Sur la figure 1, des doubles-flèches 20, 22 et 24 représentent les voies de commande reliant respectivement le centre 10 et le point 6, les points 6 et 8, et le point 8 et le centre 12.

A titre d'exemple, le protocole utilisé pour transporter les signaux de commande d'appels entre les centres SCP et le point CCP auquel ils sont raccordés est ici le protocole INAP. Toujours à titre d'exemple, le protocole utilisé pour transporter les signaux de commande d'appels entre les différents points CCP est ici le protocole ISUP.

Ces protocoles INAP et ISUP comportent tous les deux un message de commande d'établissement d'appels et un accusé de réception de ce message. Dans ces protocoles, le message de commande d'établissement d'appels commande l'établissement d'une liaison de télécommunication. Ce message est émis par l'équipement appelant vers un point CCP et comporte notamment l'adresse sur le réseau de l'équipement appelé. Ce message est typiquement transmis de proche en proche d'un point CCP au point CCP suivant, jusqu'à l'équipement appelé. Ce message est traité par les différents points CCP qui l'ont reçu, de manière à ce qu'en fin de compte une liaison de télécommunication puisse être établie entre l'équipement appelant et l'équipement appelé.

Dans le cas du protocole INAP et du protocole ISUP, ces messages s'appellent respectivement « connect » et « Message Initial d'Adresse » (M.I.A). Chacun de ces messages comporte en plus de l'adresse de l'équipement appelé, des octets non utilisés qui ont, par exemple, été prévus pour de futures extensions des fonctionnalités du protocole. Par exemple, les messages "connect" et "M.I.A" comportent chacun des paramètres "ScfID" et "Correlation-ID" définis dans le standard sur l'INAP et sur l'ISUP pour la connexion d'un périphérique intelligent.

Sur la figure 1, les autres voies de communication du réseau 4 destinées à l'établissement de liaison de télécommunication entre les différents équipements du réseau 4, sont représentées par des traits simples reliant entre eux les différents équipements. En particulier, sur la figure 1 sont représentées des voies de communication non réservées 30, 32, et 34 reliant respectivement le terminal 16 et le point 6, le terminal 18 et le point 8, et les points 6 et 8.

Sur la figure 1, est également représentée en trait gras une liaison reliant les centres 10 et 12. La liaison 40 est ici, par exemple, une liaison établie par l'intermédiaire du réseau IP du réseau 4.

Sur la figure 1, les traits de liaison entre deux équipements comportant une partie centrale en pointillés indiquent que cette voie de communication s'effectue éventuellement par l'intermédiaire d'autres points CCP non représentés sur la figure 1.

Dans la figure 1, les terminaux 16 et 18 sont, par exemple, des postes téléphoniques classiques fixes ou mobiles.

Les points CCP du réseau 4 sont aptes à recevoir un signal de commande d'appel dans un format conforme au protocole INAP et à le retransmettre à l'identique dans un format conforme au protocole ISUP, et vice versa.

Les centres 10 et 12 sont aptes chacun à traiter une demande de service lors d'un appel d'un client du réseau 4. Ce service est, par exemple, choisi parmi un ensemble composé d'un service de messagerie vocale, d'un service d'annuaire téléphonique, d'un service de paiement par carte pré-payée, d'un service de renseignements téléphoniques, et d'un service de restriction des numéros de téléphone que l'on peut appeler.

De manière à traiter les demandes de service, les centres 10 et 12 sont aptes à émettre des signaux de commande d'appels sur les voies de commande de manière, par exemple, à établir des liaisons de télécommunication entre le terminal du client et un autre terminal. De plus, lorsque la demande de service à traiter implique l'utilisation d'un serveur vocal, les centres 10 et 12 sont aptes à commander l'établissement d'une liaison de télécommunication entre le terminal du client et un serveur vocal puis à commander ce serveur vocal de manière à rendre le service demandé.

Ces centres SCP sont soit implantés directement dans les points CCP du réseau 4, soit formés par des serveurs informatiques indépendants de ces points CCP comme illustré sur la figure 1.

Ici, chacun des centres 10 et 12 est également raccordé au réseau IP par l'intermédiaire d'une interface supplémentaire formée, par exemple, ici par une carte d'interface IP (Internet Protocol). Ainsi, chacun des centres est apte à établir une liaison de télécommunication avec un autre centre du réseau 4, en utilisant le protocole de communication IP (Internet Protocol).

Les centres 10, 12 sont adaptés pour affecter un identifiant à chaque appel d'un client en cours de traitement.

Les centres 10 et 12 sont également associés à des mémoires respectives 50 et 52. Les mémoires 50 et 52 comportent chacune l'adresse sur le réseau IP du centre auquel elles sont associées. Ces adresses correspondent, par exemple, à l'adresse physique des centres 10 et 12 ou également dans le cas où un même serveur informatique héberge plusieurs services, l'adresse correspond à l'adresse physique du serveur sur le réseau IP, à laquelle est ajouté un identifiant du service.

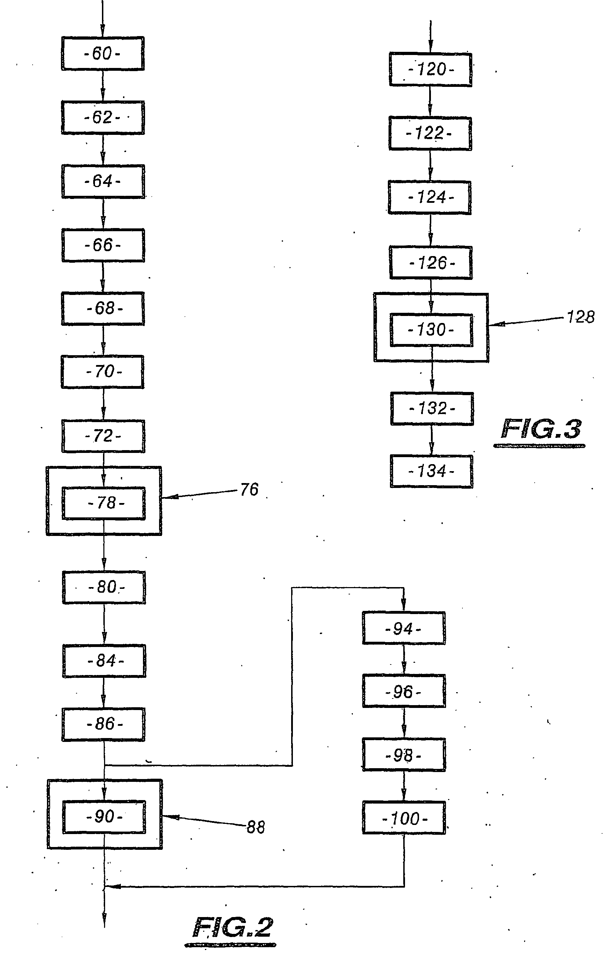

Les différents points CCP, centres SCP et terminaux du réseau 4 sont réalisés de façon classique, de manière à être capables d'exécuter les procédés des figures 2 et 3.

Le procédé d'établissement d'une liaison directe de coordination entre les centres 10 et 12 va maintenant être décrit en regard de la figure 2 et dans le cas particulier où le centre 10 est un centre de cartes pré-payées et le centre 12 est un annuaire téléphonique vocal.

Le centre 10 permet donc dans ce premier exemple de réalisation d'établir une liaison de télécommunication vers un destinataire en payant avec une carte pré-payée. Le serveur 12, quant à lui, permet de retrouver le numéro de téléphone d'un destinataire à partir du nom de ce destinataire. Dans cet exemple, le centre 12 correspond au numéro de téléphone "12" et le centre 10 au numéro de téléphone "3610".

Initialement, le client décroche le combiné de son terminal 16 et numérote, lors d'une étape 60, le numéro "3610".

Le point 6 reçoit, lors d'une étape 62, ce numéro de téléphone et transmet, lors d'une étape 64, une demande de paiement par carte pré-payée au centre 10 par l'intermédiaire de la voie de commande 20.

Le centre 10 commande alors un serveur vocal pour informer le client qu'il doit saisir son numéro de carte pré-payée.

Ensuite, le client saisit, lors d'une étape 66, le numéro de sa carte pré-payée sur le clavier de son terminal. Ce numéro est transmis jusqu'au centre 10 qui vérifie, à l'étape 68, son authenticité. Dans le cas où ce numéro est authentique, le centre 10 détermine et affecte, lors d'une étape 70, un identifiant unique correspondant à cet appel.

Ensuite, le client saisit, lors d'une étape 72 sur le clavier de son terminal 16, le numéro de téléphone qu'il souhaite appeler, ici le numéro "12". Le numéro de téléphone est transmis au centre 10.

Le centre 10 émet sur la voie 20, lors d'une étape 76, un message de commande d'établissement d'appels contenant comme numéro de téléphone appelé, le numéro "12".

Lors de cette étape 76, le centre 10 insère, lors d'une opération 78, son adresse et l'identifiant de cet appel dans les octets du message de commande normalement réservés pour les paramètres "Scf ID" et "Correlation-ID".

Ce message de commande est alors transporté, lors d'une étape 80, jusqu'au centre 12 par l'intermédiaire des voies 20, 22 et 24.

Lorsque le centre 12 reçoit l'adresse et l'identifiant d'appel contenu dans le message de commande, il les extrait, lors d'une étape 84, puis commande, lors d'une étape 86, l'établissement de la liaison 40 vers le centre 10, en utilisant à cet effet l'adresse extraite lors de l'étape 84 et son interface IP.

Ensuite, lors d'une étape 88, les centres 10 et 12 échangent toutes les informations nécessaires pour coordonner leurs traitements respectifs uniquement par l'intermédiaire de la liaison 40.

A cet effet, les centres 10 et 12 utilisent de préférence, un protocole conforme à celui décrit dans la demande de brevet EP-A1-1 179 959. A-chaque fois que l'un des centres 10 ou 12 émet une information vers l'autre centre, il procède à une opération 90 lors de laquelle il insère dans le message transmis à l'autre centre l'identifiant de l'appel concerné par ce message. Ainsi, chaque centre est capable d'identifier l'appel concerné par les informations reçues de sorte que la coordination des traitements s'effectue pour chacun des appels traités.

Lors de cette étape 88, les informations de coordination concernent, par exemple, principalement la progression du traitement. Ainsi, ici, le centre 12 transmet à intervalles réguliers au centre 10, le montant qui sera prélevé sur le compte associé à la carte pré-payée du client. D'autres informations peuvent également être transmises par l'intermédiaire de cette voie 40, telles que par exemple un code de tarification, une commande d'interruption de service ou autre.

Simultanément à cette étape 88, le centre 12 interagit directement, lors d'une étape 94 avec le client, par exemple, le centre 10 commande l'établissement d'une liaison de télécommunication entre le terminal 16 et un serveur vocal, puis commande ce serveur vocal pour acquérir des informations transmises vocalement par le client.

Une fois que le numéro de téléphone recherché par le client a été trouvé, le centre 12 émet, lors d'une étape 96, un message d'établissement d'une liaison de télécommunication entre le terminal 16 et le terminal 18 si le terminal 18 correspond au numéro de téléphone recherché. Ce message est transmis par l'intermédiaire de la voie 24 au point 8.

Le centre 12 a alors fini de traiter la demande du client et lors d'une étape 98, il commande la libération ou l'interruption de la liaison de télécommunication établie entre le serveur vocal et le terminal 16, en transmettant au point 8 par la voie 24, le message correspondant.

Il libère ou interrompt également la liaison 40 lors d'une étape 100.

Ainsi, dans le procédé de la figure 2, les traitements des centres 10 et 12 sont coordonnés de manière à ce que le service rendu par le centre 12 puisse être payé à partir d'une carte pré-payée gérée par le centre 10.

Dans le procédé de la figure 2, c'est le client lui-même qui émet la première et la deuxième demandes de service en composant respectivement le "3610" et le "12". Le procédé de la figure 3 illustre un procédé similaire, dans le cas particulier où le client n'émet pas lui-même la demande de service. Le procédé de la figure 3 sera décrit dans le cas particulier où le centre 10 offre un service de répertoire téléphonique vocal associé à la ligne du terminal 16 et le centre 12 offre un service de liste de numéros interdits associé également à la ligne du terminal 16. Cette liste de numéros interdits est également connue sous le terme de liste noire.

Le procédé de la figure 3 étant en grande partie similaire à celui de la figure 2, seules les particularités de ce procédé vis-à-vis de celui de la figure 2 seront décrites en détail.

Lors d'une étape 120, le client décroche le combiné de son terminal 16.

En réponse à cette action, le point 6 transmet automatiquement, lors d'une étape 122, une première demande de service vers le centre 10.

L'étape 122 est réalisée avant même que le client ait numéroté un quelconque numéro de téléphone sur le clavier de son terminal 16.

Ensuite, lors d'une étape 124, le centre 10 commande l'établissement d'une liaison de télécommunication entre le terminal 16 et un serveur vocal, puis le centre 10 commande ce serveur vocal de manière à ce que le client puisse sélectionner un numéro de téléphone à appeler dans le répertoire téléphonique vocal. Ici, on supposera que le numéro de téléphone à appeler correspond à celui du terminal 18.

Une fois la sélection du numéro de téléphone à appeler terminée, le centre 10 transmet un premier message de commande d'établissement d'appel, lors d'une étape 126, au point 6 par l'intermédiaire de la voie 20 pour commander l'établissement d'une liaison de télécommunication entre les terminaux 16 et 18. Ce premier message comporte l'adresse du centre 10 et l'identifiant de l'appel généré par le centre 10.

En réponse à tout message d'établissement d'appel entre le terminal 16 et un autre terminal, le point 6 transmet automatiquement et systématiquement, lors d'une étape 128, une deuxième demande de service vers le centre 12. La transmission de cette seconde demande de service déclenche la transmission par le point 6 d'un second message d'établissement d'appel à destination du centre 12. Lors de cette étape 128, le point 6 insère, lors d'une opération 130, l'adresse du centre 10 et l'identifiant d'appel contenu dans le premier message, dans ce second message. Par ce biais-là, l'adresse du centre 10 et l'identifiant d'appel sont donc transmis jusqu'au centre 12.

Ensuite, le centre 12, lors d'une étape 132 extrait l'adresse et l'identifiant d'appel reçus par l'intermédiaire des voies 22 et 24 et commande, lors d'une étape 134, l'établissement de la liaison 40. Ici, la liaison 40 est utilisée entre autre, par le centre 12 pour indiquer au centre 10 si le numéro de téléphone sélectionné correspond à l'un de ceux enregistrés sur la liste noire. Dans l'affirmative, le centre 10 en informe alors le client. Dans le cas contraire, le centre 12 informe le centre 10 que le numéro de téléphone sélectionné n'appartient pas à la liste noire et que le traitement du service peut continuer.

Dans ce mode de réalisation, non seulement le centre 10 ne connaît pas à l'avance l'adresse du centre 12 pour établir avec ce dernier une liaison directe mais en plus le centre 10 ne connaît pas non plus l'existence d'un second service à appeler après le service de répertoire vocal.

Ainsi ce second mode de réalisation montre qu'il n'est pas nécessaire que le premier centre SCP activé sache qu'un second centre SCP sera invoqué plus tard.

Les figures 4a et 4b illustrent différentes possibilités de mise en oeuvre des procédés décrits en regard des figures 2 et 3, dans le cas où le nombre de centres SCP appelés lors d'un même appel, est strictement supérieur à deux.

Sur les figures 4a et 4b, le réseau 4 comporte un centre SCP 150 supplémentaire raccordé à un point CCP 152 supplémentaire.

Les équipements et les voies et liaisons déjà décrits en regard de la figure 1 portent sur les figures 4a et 4b les mêmes références numériques.

Le centre 150 est raccordé par l'intermédiaire d'une voie de commande 154 au point 152.

Le point 152 est, quant à lui, raccordé par l'intermédiaire d'une voie de commande 158 au point 8 et par l'intermédiaire d'une voie non réservée 160 à ce même point 8.

Sur la figure 4a, une liaison de coordination 162 relie le centre 150 au centre 10.

Sur la figure 4b, cette liaison 162 est remplacée par une liaison de coordination 164 qui relie le centre 150 au centre 12.

Le procédé pour établir la liaison 40 des figures 4a et 4b est identique, soit à celui de la figure 2, soit à celui de la figure 3.

Toutefois, contrairement aux procédés des figures 2 et 3, lors du traitement, par exemple de la seconde demande de service du client. Une troisième demande de service est émise à destination du centre 150 ce qui déclenche l'émission d'un signal de commande d'établissement d'appel. Dans le cas de la figure 4a, le centre 12 insère dans ce nouveau message de commande d'établissement d'appel, l'adresse du centre 10 et l'identifiant d'appel transmis précédemment par le centre 10. Ainsi, en réponse à la réception de ces informations, le centre 150 établit la liaison 162 avec le centre 10 d'une façon similaire à ce qui a été décrit en regard des étapes 84 et 86 de la figure 2. Dès lors, dans la configuration de la figure 4, les informations de coordination des différents traitements en cours ne sont échangées qu'entre le centre SCP appelé en premier et chacun des centres SCP appelés ultérieurement.

Dans le cas de la figure 4b, de façon similaire à ce qui a été indiqué en regard de la figure 4a, lors du traitement de la seconde demande de service, le centre 12 émet un message de commande d'établissement d'appel à destination du centre 150. Toutefois, contrairement aux cas de la figure 4a, le centre 12 insère sa propre adresse et son propre identifiant d'appel dans ce message, de sorte que le centre 150 établit non pas une liaison de coordination avec le centre 10, mais avec le centre 12. Ainsi, dans le cas de la figure 4b, des informations de coordination des traitements sont échangées uniquement entre deux centres appelés successivement.

On notera que dans le procédé décrit ci-dessus en regard des figures 2, 3, 4a et 4b, la liaison de coordination suit un chemin qui est différent de celui emprunté par les signaux de commande d'appels échangés entre les centres 10 et 12. Ainsi, cette liaison de coordination ne transite pas par les centres CCP utilisés pour établir la communication au cours de laquelle les services ont été déclenchés.

Le procédé décrit ici ne fait pas intervenir de règles statiques et préenregistrées de résolution de conflits entre différents centres SCP simultanément appelés. Au contraire, un échange d'informations de coordination entre les différents centres SCP est établi, de manière à ce que chaque centre connaisse le contexte d'exécution du service et surtout la progression de leurs exécutions dans les autres centres.

De plus, le procédé utilise les signaux de commande d'appels pour transmettre l'adresse d'un centre SCP vers un autre centre SCP. Tous les réseaux intelligents comportent de tels signaux et ces signaux comportent presque toujours des octets non utilisés pour des utilisations futures. Ainsi, en utilisant ces signaux pour transmettre l'adresse et l'identificateur d'appel d'un centre à un autre, il n'est pas nécessaire de prévoir la mise oeuvre d'un protocole supplémentaire.

Dès lors, le procédé décrit ici ne nécessite aucune modification des points CCP du réseau. En particulier, aucun mécanisme d'encapsulation de protocole n'est mis en oeuvre dans les poins CCP, tel que par exemple, le mécanisme OCCRUI (Out Channel Call Related User Interaction). Le mécanisme OCCRUI permet d'encapsuler un protocole applicatif dans la signalisation de commande d'appels, les informations véhiculées dans ce protocole étant transparentes pour le réseau. Toutefois, la mise en oeuvre d'un tel mécanisme suppose que des procédures d'établissement, de maintien et de libération d'un canal de communication encapsulé dans les signaux de commande d'appels soit mis en oeuvre.

On notera également que le procédé décrit ici ne met pas en oeuvre une procédure d'échanges d'informations de coordination par l'intermédiaire d'une base de données commune aux différents centres SCP. En effet, de telles procédures ne permettent pas d'échanger des informations qui sont mises à jour pratiquement en temps réel, telles que par exemple la progression du traitement d'un service car de telles procédures nécessitent un nombre d'écriture dans la base de données trop important.

Les procédés des figures 2 et 3 ont été décrits ici dans le cas particulier où l'adresse et l'identifiant d'appel sont transmis du premier centre SCP appelé vers le second centre SCP appelé. Toutefois, en variante, l'adresse et l'identifiant d'appel sont transmis du second centre appelé vers le premier centre appelé. A cet effet, par exemple, le second centre appelé, tel que le centre 12, insère son adresse et l'identifiant d'appel dans l'accusé de réception du message de commande d'établissement d'appel reçu. Cet accusé de réception présente la propriété de se propager en sens inverse du message de commande d'établissement d'appel reçu de sorte qu'il est possible de communiquer à l'aide de cet accusé réception l'adresse du second centre appelé au premier centre appelé.

L'insertion de l'adresse du centre et de l'identificateur d'appel ont été décrits ici dans le cas particulier des protocoles INAP et ISUP. Dans le cas où le protocole mis en oeuvre pour la signalisation de commande d'appels est le protocole SIP, un message "INVITE" contenant un paramètre « request - URI » est, par exemple, utilisé à la place des messages "connect" et "M.I.A". Par exemple, la forme du paramètre « request - URI » est la suivante :
sip:destinataire@francetelecom.com;\
adresse = x ;\
référence = y
où x représente l'adresse du centre SCP et y l'identificateur d'appel.

Le protocole SIP est utilisé entre les centres SCP et les points CCP et entre les points CCP entre eux.

Dans le cas où le réseau téléphonique utilisé est un réseau téléphonique commuté utilisant des adresses conformes à la norme E.164, l'adresse du centre SCP et l'identificateur d'appels sont insérés dans le message de commande d'établissement d'appel en mettant à profit le fait que le nombre d'octets disponibles pour écrire l'adresse du destinataire est plus grand que le nombre d'octets réellement utilisés pour écrire cette adresse. Par conséquent, l'adresse du centre et l'identificateur d'appels sont inscrits dans les octets de ce champ encore disponibles après que l'adresse du destinataire y ait été inscrite.

Le système de la figure 1 et le procédé de la figure 2 ont été décrits dans le cas particulier ou la liaison de coordination 40 est établie par l'intermédiaire d'un réseau IP. Toutefois, en variante, cette liaison 40 est établie par l'intermédiaire d'un réseau de transmission d'informations quelconque capable d'établir une liaison de transmission d'informations entre les centres 10 et 12 en utilisant des voies de communication indépendantes et distinctes des voies 20, 22 et 24. Par exemple, en variante, la liaison 40 est établie par l'intermédiaire de voies de commande du réseau 4 différentes et distinctes des voies 20, 22 et 24.

Le procédé de la figure 2 a été décrit dans le cas particulier où la liaison 40 peut être utilisée pour plusieurs appels différents. En variante, le centre 12 transmet uniquement lors de l'établissement de la liaison 40, l'identifiant de l'appel du client au centre 10. La liaison 40 est ensuite réservée pour l'échange d'informations de synchronisation concernant uniquement cet appel particulier. Dès lors, pour que le centre 10 sache que l'information reçue concerne cet appel, il n'est plus nécessaire d'adjoindre à chaque information échangée par l'intermédiaire de la liaison 40 un identifiant de l'appel. L'opération 90 n'est donc exécutée qu'une seule fois quel que soit le nombre d'informations de synchronisation échangé.

## Revendications

1. Procédé pour établir une liaison (40) de coordination entre un premier et un second centres (10, 12) de commande de l'exécution de service dans un réseau de télécommunication intelligent (4),
le premier et le second centres étant aptes à traiter chacun de façon autonome respectivement une première et une seconde demandes de service, et le réseau comportant, en plus de voies (30, 32, 36, 38) de communication utilisées pour établir des liaisons de télécommunication entre différents terminaux raccordés au réseau, des voies (20, 22, 24) de communication réservées aux transports de signaux de commande d'appels pour commander l'établissement, la modification et/ou la libération de chaque liaison de télécommunication dans ce réseau (4),
ce procédé comportant une phase de traitement d'un appel qui est déclenchée à chaque appel émis par un client et qui comprend une étape (86) d'établissement de la liaison de coordination à l'aide d'une adresse d'au moins un des deux centres (10, 12) pour que ces centres puissent coordonner leurs traitements respectifs des première et seconde demandes de service du client,
**caractérisé :**
- **en ce que** l'un des centres transmet son adresse à l'autre centre en insérant (en 78) cette adresse dans l'un des signaux de commande d'appels transmis vers l'autre centre, et
- **en ce que** le centre ayant reçu l'adresse insérée dans un signal de commande d'appel établit (en 86) ladite liaison de coordination en utilisant des voies de communication distinctes de celles employées pour transporter le signal de commande d'appel dans lequel est insérée l'adresse de l'un des centres.

2. Procédé selon la revendication 1, **caractérisé en ce que** lorsque plusieurs phases de traitement d'appels se déroulent simultanément pour différents clients du réseau (4), le centre qui insère (en 78) son adresse dans le signal de commande d'appel, insère en plus un identifiant de l'appel traité, et **en ce que** les premier et second centres (10, 12) d'exécution de service indiquent (en 90) l'appel concerné par les informations de coordination transmises par l'intermédiaire de ladite liaison de coordination en utilisant cet identifiant de manière à coordonner leur traitement respectif pour chaque appel.

3. Procédé selon l'une quelconque des revendications précédentes, **caractérisé en ce que** seule la liaison (40) de coordination est utilisée pour échanger des informations de coordination des traitements respectifs des première et seconde demandes de service effectués par les deux centres (10, 12) d'exécution de service.

4. Procédé selon l'une quelconque des revendications précédentes pour un réseau, dans lequel le signal de commande d'appel comporte au moins un champ d'adresse propre à recevoir l'adresse sur le réseau du second centre, ce champ comportant encore une partie non utilisée lorsque l'adresse du second centre est enregistrée dans ce champ, **caractérisé en ce que** l'adresse du premier centre et/ou l'identifiant d'appel sont insérés dans la partie non utilisée du champ d'adresse, de manière à ce que ces informations se propagent conjointement au travers du réseau, jusqu'au second centre (12).

5. Procédé selon l'une quelconque des revendications précédentes pour un réseau dans lequel les premier et second centres (10, 12) sont raccordés à des points de commande (6, 8) différents du réseau, les points de commande du réseau étant propres à raccorder entre elles, les différentes voies de communication pour former lesdites liaisons de télécommunication, **caractérisé en ce que** :
- le premier centre (10) et le second centre (12) communiquent avec leur point (6, 8) de commande respectif en utilisant un premier protocole de communication pour recevoir et/ou transmettre lesdits signaux de commande d'appels,
- les différents points (6, 8) de commande du réseau communiquent entre eux en utilisant un second protocole de communication différent du premier pour transmettre et/ou recevoir lesdits signaux de commande d'appels, et
- les premier et second centres communiquent entre eux par l'intermédiaire de la liaison de coordination (40) en utilisant un troisième protocole de communication différent des premier et second protocoles de communication.

6. Procédé selon la revendication 5, **caractérisé en ce que** le premier protocole de communication est le protocole INAP, Intelligent Network Application Protocol, et **en ce que** le second protocole de communication est le protocole ISUP, Integrated Service Digital Network - User Part.

7. Procédé selon l'une quelconque des revendications précédente pour un réseau dans lequel les premier et second centres (10, 12) sont raccordés à des points de commande (6, 8) différents du réseau, les points de commande du réseau étant propres à raccorder entre elles, les différentes voies de communication pour former lesdites liaisons -de télécommunication, **caractérisées en ce que** :
- le premier centre (10) et le second centre (12) communiquent avec leur point (6, 8) de commande respectif en utilisant un premier protocole de communication pour recevoir et/ou transmettre lesdits signaux de commande d'appels,
- les différents points (6, 8) de commande du réseau communiquent entre eux en utilisant également le premier protocole, et
- les premier et second centres communiquent entre eux par l'intermédiaire de la liaison de coordination (40) en utilisant un second protocole de communication différent du premier protocole de communication.

8. Procédé selon la revendication 7, **caractérisé en ce que** le premier protocole de communication est le protocole SIP, Station Initiation Protocol.

9. Réseau de télécommunication intelligent apte à établir une liaison (40) de coordination entre un premier et un second centres (10, 12) de commande de l'exécution de services, ce réseau comportant:
- le premier et le second centres, ces centres étant aptes à traiter chacun de façon autonome respectivement une première et une seconde demandes de service,
- des voies (30, 32, 36, 38) de communication utilisées pour établir des liaisons de télécommunication entre différents terminaux raccordés au réseau, et
- des voies (20, 22, 24) de communication réservées au transport de signaux de commande d'appels pour commander l'établissement, la modification et/ou la libération de chaque liaison de télécommunication pour ce réseau,
ce réseau étant apte à exécuter une phase de traitement d'un appel qui est déclenchée à chaque appel émis par un client et qui comprend une étape (86) d'établissement de la liaison de coordination à l'aide d'une adresse d'au moins un des deux centres (10, 12) pour que ces centres puissent coordonner leurs traitements respectifs des première et seconde demandes de service du client,
**caractérisé en ce que** les centres sont adaptés pour établir la liaison de coordination en mettant en oeuvre un procédé conforme à l'une quelconque des revendications précédentes.

10. Centre de commande de l'exécution de services adapté pour être mis en oeuvre dans un réseau de télécommunications intelligent , **caractérisé en ce que** ce centre est adapté pour établir une liaison de coordination avec un autre centre en mettant en oeuvre un procédé conforme à l'une quelconque des revendications 1 à 8.

## Claims

1. Method for setting up a coordination link (40) between a first and a second service control point centres (10, 12) in an intelligent telecommunication network (4),
the first and the second centres being suitable for each respectively and independently to process a first and a second service requests, and the network comprising, in addition to communication channels (30, 32, 36, 38) used to set up telecommunication links between different terminals connected to the network, communication channels (20, 22, 24) reserved for transporting call control signals to control the setting up, modification and/or releasing of each telecommunication link in this network (4),
this method comprising a call handling phase which is triggered on each call made by a customer and which includes a step (86) for setting up the coordination link using an address of at least one of the two centres (10, 12) for these centres to be able to coordinate their respective handling of the first and second service requests from the customer,
**characterized:**
- **in that** one of the centres transmits its address to the other centre by inserting (in 78) this address in one of the call control signals transmitted to the other centre, and
- **in that** the centre having received the address inserted in a call control signal sets up (in 86) said coordination link by using communication channels separate from those employed to transport the call control signal in which the address of one of the centres is inserted.

2. Method according to Claim 1, **characterized in that**, when a number of call handling phases are running simultaneously for different customers of the network (4), the centre that inserts (in 78) its address in the call control signal also inserts an identifier of the call handled, and **in that** the first and second service control point centres (10, 12) indicate (in 90) the call affected by the coordination information transmitted via said coordination link by using this identifier to coordinate their respective handling for each call.

3. Method according to any one of the preceding claims, **characterized in that** only the coordination link (40) is used to exchange information coordinating the respective handling of the first and second service requests made by the two service control point centres (10, 12).

4. Method according to any one of the preceding claims, for a network in which the call control signal comprises at least one address field specifically for receiving the address on the network of the second centre, this field also comprising a part that is not used when the address of the second centre is registered in this field, **characterized in that** the address of the first centre and/or the call identifier are inserted in the unused part of the address field, so that this information is propagated together through the network, to the second centre (12).

5. Method according to any one of the preceding claims for a network in which the first and second centres (10, 12) are connected to different control points (6, 8) of the network, the network control points being specifically for interconnecting the various communication channels to form said telecommunication links, **characterized in that**:
- the first centre (10) and the second centre (12) communicate with their respective control point (6, 8) by using a first communication protocol to receive and/or transmit said call control signals,
- the various control points (6, 8) of the network intercommunicate by using a second communication protocol different from the first to transmit and/or receive said call control signals, and
- the first and second centres intercommunicate via the coordination link (40) by using a third communication protocol different from the first and second communication protocols.

6. Method according to Claim 5, **characterized in that** the first communication protocol is the INAP protocol (Intelligent Network Application Protocol) and **in that** the second communication protocol is the ISUP (Integrated Services Digital Network - User Part) protocol.

7. Method according to any one of the preceding claims for a network in which the first and second centres (10, 12) are connected to different control points (6, 8) of the network, the network control points being specifically for interconnecting the various communication channels to form said telecommunication links, **characterized in that**:
- the first centre (10) and the second centre (12) communicate with their respective control point (6, 8) by using a first communication protocol to receive and/or transmit said call control signals,
- the various control points (6, 8) of the network intercommunicate by also using the first protocol, and
- the first and second centres intercommunicate via the coordination link (40) by using a second communication protocol different from the first communication protocol.

8. Method according to Claim 7, **characterized in that** the first communication protocol is the SIP protocol (Session Initiation Protocol).

9. Intelligent telecommunication network suitable for setting up a coordination link (40) between a first and a second service control point centres (10, 12), this network comprising:
- the first and the second centres, these centres being suitable for each respectively and independently to process a first and a second service request,
- communication channels (30, 32, 36, 38) used to set up telecommunication links between different terminals connected to the network, and
- communication channels (20, 22, 24) reserved for transporting call control signals to control the setting up, modification and/or releasing of each telecommunication link for this network,
this network being suitable for executing a call handling phase which is triggered on each call made by a customer and which includes a step (86) for setting up the coordination link using an address of at least one of the two centres (10, 12) for these centres to be able to coordinate their respective handling of the first and second service requests from the customer,
**characterized in that** the centres are suitable for setting up the coordination link by implementing a method according to any one of the preceding claims.

10. Service control point centre suitable for implementation in an intelligent telecommunication network, **characterized in that** this centre is suitable for setting up a coordination link with another centre by implementing a method according to any one of Claims 1 to 8.

## Patentansprüche

1. Verfahren zum Aufbau einer Koordinationsverbindung (40) zwischen einem ersten und einem zweiten Steuerungszentrum (10, 12) der Ausführung von Diensten in einem intelligenten Fernmeldenetz (4),
wobei das erste und das zweite Zentrum ausgelegt sind, um jeweils autonom eine erste bzw. eine zweite Dienstanfrage zu verarbeiten, und das Netz zusätzlich zu Kommunikationskanälen (30, 32, 36, 38), die verwendet werden, um Fernmeldeverbindungen zwischen verschiedenen an das Netz angeschlossenen Endgeräten aufzubauen, Kommunikationskanäle (20, 22, 24) aufweist, die für den Transport von Anrufsteuersignalen reserviert sind, um den Aufbau, die Veränderung und/oder die Freigabe jeder Fernmeldeverbindung in diesem Netz (4) zu steuern,
wobei dieses Verfahren eine Phase der Verarbeitung eines Anrufs aufweist, die bei jedem von einem Kunden gesendeten Anruf ausgelöst wird, und die einen Schritt (86) des Aufbaus der Koordinationsverbindung mit Hilfe einer Adresse mindestens eines der zwei Zentren (10, 12) enthält, damit diese Zentren ihre Verarbeitungen der ersten bzw. zweiten Dienstanfrage des Kunden koordinieren können, **gekennzeichnet:**
- **dadurch, dass** eines der Zentren seine Adresse an das andere Zentrum überträgt, indem es (in 78) diese Adresse in eines der Anrufsteuersignale einfügt, die an das andere Zentrum übertragen werden, und
- **dadurch**, dass das Zentrum, das die in ein Anrufsteuersignal eingefügte Adresse empfangen hat, (in 86) die Koordinationsverbindung aufbaut, indem es andere Kommunikationskanäle als diejenigen verwendet, die für den Transport des Anrufsteuersignals verwendet werden, in das die Adresse eines der Zentren eingefügt ist.

2. Verfahren nach Anspruch 1, **dadurch gekennzeichnet, dass**, wenn mehrere Anrufverarbeitungsphasen gleichzeitig für verschiedene Kunden des Netzes (4) ablaufen, das Zentrum, das (in 78) seine Adresse in das Anrufsteuersignal einfügt, außerdem eine Kennung des verarbeiteten Anrufs einfügt, und dass das erste und das zweite Dienstausführungszentrum (10, 12) den von den über die Koordinationsverbindung übertragenen Koordinationsinformationen betroffenen Anruf anzeigen (in 90), indem sie diese Kennung verwenden, um ihre jeweilige Verarbeitung für jeden Anruf koordinieren.

3. Verfahren nach einem der vorhergehenden Ansprüche, **dadurch gekennzeichnet, dass** nur die Koordinationsverbindung (40) verwendet wird, um Koordinationsinformationen der Verarbeitungen der ersten bzw. zweiten Dienstanfrage auszutauschen, die von den zwei Dienstausführungszentren (10, 12) ausgeführt werden.

4. Verfahren nach einem der vorhergehenden Ansprüche für ein Netz, bei dem das Anrufsteuersignal mindestens ein Adressenfeld aufweist, das geeignet ist, um die Adresse im Netz des zweiten Zentrums zu empfangen, wobei dieses Feld noch einen nicht genutzten Bereich aufweist, wenn die Adresse des zweiten Zentrums in diesem Feld gespeichert ist, **dadurch gekennzeichnet, dass** die Adresse des ersten Zentrums und/oder die Anrufkennung in den nicht genutzten Teil des Adressenfelds eingefügt wird, damit diese Informationen sich zusammen über das Netz bis zum zweiten Zentrum (12) ausbreiten.

5. Verfahren nach einem der vorhergehenden Ansprüche für ein Netz, bei dem das erste und das zweite Zentrum (10, 12) mit unterschiedlichen Steuerpunkten (6, 8) des Netzes verbunden sind, wobei die Steuerpunkte des Netzes geeignet sind, die verschiedenen Kommunikationskanäle miteinander zu verbinden, um die Fernmeldeverbindungen zu bilden, **dadurch gekennzeichnet, dass**:
- das erste Zentrum (10) und das zweite Zentrum (12) mit ihrem jeweiligen Steuerpunkt (6, 8) kommunizieren, indem sie ein erstes Kommunikationsprotokoll verwenden, um die Anrufsteuersignale zu empfangen und/oder zu übertragen,
- die verschiedenen Steuerpunkte (6, 8) des Netzes miteinander kommunizieren, indem sie ein zweites, vom ersten unterschiedliches Kommunikationsprotokoll verwenden, um die Anrufsteuersignale zu übertragen und/oder zu empfangen, und
- das erste und das zweite Zentrum über die Koordinationsverbindung (40) miteinander kommunizieren, indem sie ein drittes Kommunikationsprotokoll verwenden, das sich von dem ersten und dem zweiten Kommunikationsprotokoll unterscheidet.

6. Verfahren nach Anspruch 5, **dadurch gekennzeichnet, dass** das erste Kommunikationsprotokoll das INAP-Protokoll, Intelligent Network Application Protocol, ist, und dass das zweite Kommunikationsprotokoll das ISUP-Protokoll, Integrated Service Digital Network - User Part, ist.

7. Verfahren nach einem der vorhergehenden Ansprüche für ein Netz, bei dem das erste und das zweite Zentrum (10, 12) mit unterschiedlichen Steuerpunkten (6, 8) des Netzes verbunden sind, wobei die Steuerpunkte des Netzes geeignet sind, die verschiedenen Kommunikationskanäle miteinander zu verbinden, um die Fernmeldeverbindungen zu bilden, **dadurch gekennzeichnet, dass**:
- das erste Zentrum (10) und das zweite Zentrum (12) mit ihrem jeweiligen Steuerpunkt (6, 8) kommunizieren, indem sie ein erstes Kommunikationsprotokoll verwenden, um die Anrufsteuersignale zu empfangen und/oder zu übertragen,
- die verschiedenen Steuerpunkte (6, 8) des Netzes miteinander kommunizieren, indem sie ebenfalls das erste Protokoll verwenden, und
- das erste und das zweite Zentrum über die Koordinationsverbindung (40) miteinander kommunizieren, indem sie ein zweites Kommunikationsprotokoll verwenden, das sich von dem ersten Kommunikationsprotokoll unterscheidet.

8. Verfahren nach Anspruch 7, **dadurch gekennzeichnet, dass** das erste Kommunikationsprotokoll das SIP-Protokoll, Session Initiation Protocol, ist.

9. Intelligentes Fernmeldenetz, das ausgelegt ist, um eine Koordinationsverbindung (40) zwischen einem ersten und einem zweiten Steuerzentrum (10, 12) der Ausführung von Diensten aufzubauen, wobei dieses Netz aufweist:
- das erste und das zweite Zentrum, wobei diese Zentren ausgelegt sind, um jeweils autonom eine erste bzw. eine zweite Dienstanfrage zu verarbeiten,
- Kommunikationskanäle (30, 32, 36, 38), die verwendet werden, um Fernmeldeverbindungen zwischen verschiedenen an das Netz angeschlossenen Endgeräten aufzubauen, und
- Kommunikationskanäle (20, 22, 24), die für den Transport von Anrufsteuersignalen reserviert sind, um den Aufbau, die Veränderung und/oder die Freigabe jeder Fernmeldeverbindung für dieses Netz zu steuern,
wobei dieses Netz ausgelegt ist, um eine Verarbeitungsphase eines Anrufs auszuführen, die bei jedem von einem Kunden gesendeten Anruf ausgelöst wird, und die einen Schritt (86) des Aufbaus der Koordinationsverbindung mit Hilfe einer Adresse mindestens eines der beiden Zentren (10, 12) aufweist, damit diese Zentren ihre Verarbeitungen der ersten bzw. zweiten Dienstanfrage des Kunden koordinieren können,
**dadurch gekennzeichnet, dass** die Zentren ausgelegt sind, um die Koordinationsverbindung aufzubauen, indem sie ein Verfahren gemäß einem der vorhergehenden Ansprüche anwenden.

10. Steuerzentrum der Ausführung von Diensten, das ausgelegt ist, um in einem intelligenten Fernmeldenetz eingesetzt zu werden, **dadurch gekennzeichnet, dass** dieses Zentrum ausgelegt ist, um unter Verwendung eines Verfahrens nach einem der Ansprüche 1 bis 8 eine Koordinationsverbindung mit einem anderen Zentrum aufzubauen.
